# EUROPÄISCHE PATENTSCHRIFT

(11) **EP 2 407 696 B1**
(45) Veröffentlichungstag und Bekanntmachung des Hinweises auf die Patenterteilung: **04.12.2013**
(21) Anmeldenummer: 11003959.1
(22) Anmeldetag: 13.05.2011
(51) Int. Cl.: F16K 37/00, G01D 5/241

(54) **Ventileinrichtung und Verfahren zur Ermittlung einer Schaltstellung eines Ventilglieds**
Valve device and method for determining a switch position of a valve member
Dispositif de soupape et procédé d'établissement d'une position de commutation d'une soupape

(30) Priorität: 14.07.2010 DE 102010027103
(43) Veröffentlichungstag der Anmeldung: 18.01.2012
(73) Patentinhaber: Festo AG & Co. KG, 73734 Esslingen (DE)
(72) Erfinder: Hörner, Michael, 73734 Esslingen (DE); Kärcher, Bernd, 72654 Neckartenzlingen (DE)
(74) Vertreter: Kocher, Mark Werner

(56) Entgegenhaltungen:
- DE-A1- 19 913 870
- US-A- 3 702 957
- US-A- 4 914 543
- US-A- 5 418 468
- FERRARI V ET AL: "Capacitive angular-position sensor with electrically-floating conductive rotor and measurement redundancy", INSTRUMENTATION AND MEASUREMENT TECHNOLOGY CONFERENCE, 2004. IMTC 04. PROCEEDINGS OF THE 21ST IEEE COMO, ITALY 18-20 MAY 2004, PISCATAWAY, NJ, USA,IEEE, US, 18. Mai 2004 (2004-05-18), Seiten 195-200VOL.1, XP010735855, DOI: 10.1109/IMTC.2004.1351027 ISBN: 978-0-7803-8248-0

## Beschreibung

Die Erfindung betrifft eine Ventileinrichtung zum Steuern eines Fluidstroms, mit einem Ventilgehäuse, an dem ein Eingangsanschluss für einen Fluidzustrom und ein Ausgangsanschluss für einen Fluidabstrom ausgebildet sind, und mit einem linear beweglichen Ventilglied, das im Ventilgehäuse zwischen einer ersten Schaltstellung und einer zweiten Schaltstellung verschiebbar gelagert ist, um eine Beeinflussung einer kommunizierenden Verbindung zwischen dem Eingangsanschluss und dem Ausgangsanschluss zu bewirken, sowie mit einer Sensoreinrichtung zur Ermittlung einer Schaltstellung des Ventilglieds, die einen Messkondensator mit einer von der Schaltstellung des Ventilglieds abhängigen Kondensatorkapazität sowie eine Auswerteeinrichtung zur Ermittlung der Kondensatorkapazität und zur Ausgabe eines kapazitätsabhängigen Messsignals umfasst, wobei der Messkondensator eine erste und eine zweite Kondensatorelektrode umfasst, die jeweils ortsfest in dem Ventilgehäuse angeordnet sind. Des Weiteren betrifft die Erfindung ein Verfahren zur Ermittlung einer Schaltstellung eines Ventilglieds.

Die US 5,418,468 offenbart eine Vorrichtung zur Bestimmung der Position eines beweglichen Objekts, die paarweise angeordnete und elektrisch leitfähige Objekte zur Bildung eines Kondensators sowie ein zwischen den leitfähigen Objekten angeordnetes bewegliches, nichtleitendes Objekt umfasst, wobei eine Kapazitätsänderung des Kondensators durch die Bewegung des nichtleitenden Objekts hervorgerufen wird, die als Messgröße zur Bestimmung der Position des beweglichen Objekts herangezogen wird.

Aus der US 4,914,543 ist eine Anordnung aus drei rohrförmigen, konzentrisch zueinander angeordneten Elektroden bekannt, die ein Messsystem zur Bestimmung einer Position der innersten Elektrode relativ zu den äußeren Elektroden bilden.

Die DE 199 13 870 A1 offenbart einen Positionssensor für eine elektromagnetisch betriebene Ventilsteuerung zur Feststellung der augenblicklichen Ventilstellung, bei dem eine Kapazitätsänderung eines Kondensators, dessen eine Elektrode mit der Bewegung des Ventils mitbewegt wird, als Ausgangssignal die Positionsangabe liefert.

Aus der GB 2 155 638 A ist ein Positionsmesssystem auf kapazitiver Basis bekannt, bei dem ein Fluidkolben schiebebeweglich in einem Zylindergehäuse aufgenommen ist und zentral von einer Sensorstange durchsetzt ist. Der Fluidkolben bildet zusammen mit der Sensorstange einen Zylinderkondensator aus, dessen Kapazität durch die Menge eines im Arbeitsraum zwischen Sensorstange und Arbeitszylinder aufgenommenen dielektrischen Mediums beeinflusst wird. Die variable Kapazität des Zylinderkondensators wird mit der konstanten Kapazität eines lageunabhängigen Referenzkondensators verglichen, um aus dem gebildeten Kapazitätsverhältnis die Stellung des Arbeitskolbens zu bestimmen.

Die DE 41 20 913 A1 offenbart eine Kolbenzylindereinheit als Fördervorrichtung für Atemgas in einem Beatmungsgerät mit einer zwischen dem Kolben und dem Zylinder abrollenden Rollmembran, bei der eine Messvorrichtung für den Kolbenhub vorgesehen ist. Die Messvorrichtung umfasst einen Zylinderkondensator, der durch einen Teil der Zylinderwand und einen Teil der Kolbenwand ausgebildet wird, die jeweils als elektrisch leitfähige Platten ausgebildet sind. Hierbei deckt die Rollmembran als Dielektrikum die sich jeweils überlappenden Wandteile von Kolben und Zylinder ab und beeinflusst damit die Kapazität des Zylinderkondensators. Die sich bei der Hubbewegung verändernde Kapazität des Kondensators wird zur Wegmessung für die Hubstrecke herangezogen.

Aus der DE 100 21 152 A1 ist eine Anordnung zur kapazitiven Messung des Ventilhubs eines Ventils eines Verbrennungsmotors bekannt, dessen Ventilschaft einen Schaftbereich mit einer sprunghaften Schaftveränderung in seiner Geometrie und/oder in seiner dielektrischen Materialbeschaffenheit aufweist. Der Ventilschaft bildet mit einer Messelektrode einen ersten Zylinderkondensator und mit einer Vergleichselektrode einen zweiten Zylinderkondensator. Die Messung des Ventilhubs erfolgt anhand des Vergleichs der beiden Kapazitäten der unterschiedlichen Zylinderkondensatoren.

Die der Erfindung zugrunde liegende Aufgabe besteht darin, eine Ventileinrichtung sowie ein Verfahren zur Ermittlung einer Schaltstellung eines Ventilglieds bereitzustellen, bei denen die Schaltstellung des Ventilglieds mit einem minimalen messtechnischen Aufwand ermittelt werden kann.

Diese Aufgabe wird für eine Ventileinrichtung der eingangs genannten Art mit den Merkmalen des Anspruchs 1 gelöst. Hierbei ist vorgesehen, dass das Ventilglied einen elektrisch leitenden Sensorabschnitt aufweist, der für eine von der Schaltstellung des Ventilglieds abhängige Positionierung zwischen den beiden Kondensatorelektroden ausgebildet ist, um eine Kapazität eines durch die Kondensatorelektroden gebildeten Kondensators zu beeinflussen und dass die Kondensatorelektroden als zylinderhülsenabschnittsförmige, spiegelsymmetrisch zueinander ausgerichtete, Leitelemente ausgebildet sind.

Durch die ortsfeste Anordnung der Kondensatorelektroden wird deren elektrische Kontaktierung erheblich erleichtert. Somit kann im Gegensatz zum Stand der Technik bereits mit geringen elektrischen Ladungsmengen für die Kondensatorelektroden eine präzise Erfassung der Stellung des Ventilglieds erzielt werden.

Bei dem elektrisch leitenden Sensorabschnitt des Ventilglieds kann es sich beispielsweise um einen zylindrischen Schaftabschnitt handeln, der je nach Schaltstellung des Ventilglieds zumindest teilweise zwischen die beiden Kondensatorelektroden eingeschoben wird, um die Kapazität des durch die Kondensatorelektroden gebildeten Kondensators zu beeinflussen. Diese Kapazitätsbeeinflussung durch den elektrisch leitenden Sensorabschnitt ist darauf zurückzuführen, dass dieser eine bereichsweise Verringerung des elektrisch wirksamen Abstands zwischen den beiden Kondensatorelektroden bewirkt. Hierdurch wird eine bei Abwesenheit des elektrisch leitenden Sensorabschnitts zwischen den Kondensatorelektroden geringe Kapazität des Kondensators im Falle der Anwesenheit des elektrisch leitenden Sensorabschnitts zwischen den Kondensatorelektroden erhöht.

Die Ausführung der Kondensatorelektroden als zylinderhülsenabschnittsförmige, spiegelsymmetrisch zueinander ausgerichtete,

Leitelemente ermöglicht eine kompakte Bauweise des durch die Kondensatorelektroden gebildeten Kondensators und somit eine einfache Integration in das Ventilgehäuse. Bevorzugt sind die Kondensatorelektroden als zylinderhülsenabschnnittsförmige Leitelemente ausgebildet, beispielsweise als Abschnitte eines elektrisch leitenden Rohrmaterials. Bevorzugt sind die Kondensatorelektroden als elektrisch leitfähige Flächenbereiche ausgebildet, die in einer zylindrischen Bohrung in einem Trägermaterial angeordnet sind. Besonders bevorzugt sind die Kondensatorelektroden spiegelsymmetrisch zueinander ausgerichtet, wobei eine Spiegelebene vorzugsweise eine Mittelachse der zylinderhülsenabschnittsförmigen, konzentrisch zueinander angeordneten Leitelemente umfasst.

Vorteilhafte Weiterbildungen der Erfindung sind in den Unteransprüchen angegeben.

Vorteilhaft ist es, wenn die Kondensatorelektroden und/oder eine mit einer Kondensatorelektrode verbundene Messleitung von einem, insbesondere zylinderhülsenförmig ausgebildeten, elektrisch leitenden Abschirmmittel umgeben sind. Das Abschirmmittel dient dazu, äußere Störeinflüsse, wie sie beispielsweise durch elektromagnetische Störeinstrahlungen entstehen können, von den Kondensatorelektroden zumindest weitestgehend fernzuhalten. Bevorzugt ist das Abschirmmittel schlauchförmig aus elektrisch leitendem, flexiblem Drahtgeflecht oder hülsenförmig aus elektrisch leitendem Rohrmaterial hergestellt. Eine Kombination von schlauchförmigen und hülsenförmigen Abschnitten kann ebenfalls als Abschirmmittel eingesetzt werden.

Bei einer vorteilhaften Weiterbildung der Erfindung ist vorgesehen, dass die Auswerteeinrichtung derart ausgebildet ist, dass während eines Messvorgangs die Abschirmmittel und die Messleitung, die mit einer der Kondensatorelektroden verbunden ist, auf das gleiche elektrische Potential geschaltet werden. Hierdurch kann ein Einfluss von Leitungskapazitäten zwischen den Abschirmmitteln und der Messleitung deutlich reduziert werden, wodurch das Messergebnis verbessert wird.

Bei einer weiteren Ausführungsform der Erfindung ist vorgesehen, dass die Auswerteeinrichtung einen zur Auswertung der Kondensatorkapazität ausgebildeten Analog-Digitalwandler umfasst, der zur Bereitstellung einer zur Ermittlung der Schaltstellung des Ventilglieds notwendigen elektrischen Ladungsmenge an den Kondensator ausgebildet ist. Dem Analog-Digitalwandler kommt somit eine Doppelfunktion zu, die zum Einen in Ermittlung sowie in der Digitalisierung des Betrages der Kapazität des durch die Kondensatorelektroden gebildeten Kondensators liegt. Zum Anderen dient der Analog-Digitalwandler, der einen integrierten Wandlerkondensator für eintreffende, zu digitalisierende Messsignale umfassen kann, zur Bereitstellung der elektrischen Ladungsmenge an den Kondensator. Hierbei wirkt sich vorteilhaft aus, dass der durch die Kondensatorelektroden gebildete Kondensator, der auch als Messkondensator bezeichnet wird, aufgrund der ortsfesten Anordnung im Ventilgehäuse und der dadurch ermöglichten günstigen elektrischen Kontaktierung lediglich eine geringe elektrische Ladungsmenge benötigt, um bis zu seiner für die Durchführung der Messung erforderlichen Zielkapazität aufgeladen zu werden.

Zweckmäßig ist es, wenn zwischen den Abschirmmitteln und den beiden Kondensatorelektroden ein hülsenförmig ausgebildeter Isolator angeordnet ist. Der Isolator dient der elektrischen Trennung zwischen den Abschirmmitteln und den Kondensatorelektroden. Zudem kann der Isolator bei geeigneter mechanischer Ausführung auch als Träger für die Abschirmmittel und/oder die Kondensatorelektroden dienen. Beispielsweise ist der Isolator aus einem Kunststoffmaterial ausgebildet; vorzugsweise sind die Abschirmmittel und/oder die Kondensatorelektroden stoffschlüssig, insbesondere durch Kleben, mit dem Isolator verbunden. Bei einer besonders bevorzugten Ausführungsform sind die Abschirmmittel und/oder die Kondensatorelektroden aus einer gestaltlosen Masse auf die ursprünglich elektrisch nicht leitenden Oberflächen des Isolators abgeschieden, insbesondere aufgedampft.

Vorteilhaft ist es, wenn das Ventilgehäuse eine Ausnehmung zur Aufnahme einer aus Kondensatorelektroden, Abschirmmitteln und Isolator ausgebildeten Kondensatoranordnung aufweist und/oder aus einem elektrisch isolierenden Material, insbesondere aus Kunststoff hergestellt ist. Bei der Ausnehmung kann es sich beispielsweise um eine Montageöffnung für ein insbesondere als Schieberventil ausgebildetes Ventilglied handeln, die somit in einer Doppelfunktion auch zur Aufnahme der Kondensatoranordnung genutzt werden kann. Besonders vorteilhaft ist es, wenn das Ventilgehäuse aus einem elektrisch isolierenden Material, insbesondere aus Kunststoff hergestellt ist, da hierdurch eine einfache Anbringung der Abschirmmittel ohne zusätzliche Isolationsmaßnahmen erfolgen kann.

Die der Erfindung zugrunde liegende Aufgabe wird für ein Verfahren zur Ermittlung einer Schaltstellung eines Ventilglieds mit den Merkmalen des Anspruchs 7 gelöst. Hierbei ist vorgesehen, dass zunächst ein Wandlerkondensator, der einem Analog-Digitalwandler zugehörig ist, auf einen vorgebbaren Spannungswert aufgeladen wird. Anschließend wird die elektrische Kondensatorladung des Wandlerkondensators an einen Messkondensator, dessen Kapazität von einer Stellung eines Ventilglieds abhängig ist, bereitgestellt. In einem nachfolgenden Schritt wird der Betrag der im Wandlerkondensator verbliebenen elektrischen Ladung ermittelt und dieser Betrag in ein Digitalsignal zur weiteren Verarbeitung und Auswertung durch einen Mikrocontroller umgewandelt. Anschließend kann der Mikrocontroller ein Positionssignal ausgeben. Erfindungsgemäß ist vorgesehen, dass der Messkondensator vor oder nach der Bereitstellung der Ladung durch den Wandlerkondensator mit einer vorgebbaren Ladespannung geladen wird, um nach Durchführung eines Ladungsaustauschs mit dem Wandlerkondensator im Analog-Digitalwandler eine Differenzermittlung der in zwei aufeinanderfolgenden Messvorgängen zwischen den beiden Kondensatoren ausgetauschten Ladungen ausführen zu können. Vorzugsweise entspricht die vorgegebene Ladespannung für den Messkondensator der am Wandlerkondensator angelegten Ladespannung. Vorzugsweise wird in einem ersten Schritt ein Ladungsaustausch zwischen dem aufgeladenen Wandlerkondensator und dem entladenen Messkondensator und in einem zweiten Schritt ein Ladungsaustausch zwischen dem aufgeladenen Messkondensator und dem entladenen Wandlerkondensator durchgeführt. Die Reihenfolge des Ladungsaustauschs kann auch umgekehrt werden. Jedenfalls kann durch die beiden nacheinander durchzuführenden Umladungsschritte zwischen den beiden Kondensatoren im Analog-Digitalwandler eine Differenzbildung vorgenommen werden, so dass der Messfehler minimiert wird. Der ermittelte Differenzbetrag ermöglicht in Kenntnis der Kapazität des Wandlerkondensators unmittelbar eine Kapazitätsberechnung für den Messkondensator und damit eine Positionsermittlung für das Ventilglied.

Bei einer abweichenden Ausgestaltung oder Weiterbildung des Verfahrens ist vorgesehen, dass eine Abtastung der Ladungsdifferenz im Oversampling-Verfahren vorgenommen wird und/oder vor der Verarbeitung im Mikrocontroller eine Mittelwertbildung für die ermittelten Abtastwerte erfolgt. Hierdurch kann eine Steigerung der Messgenauigkeit bewirkt werden.

Eine vorteilhafte Ausführungsform der Erfindung ist in der Zeichnung dargestellt. Dabei zeigt:
- Figur 1: eine schematische Schnittdarstellung einer Ventileinrichtung in einer ersten Schaltstellung,
- Figur 2: die Ventileinrichtung gemäß Figur 1 in einer zweiten Schaltstellung,
- Figur 3: eine perspektivische Darstellung einer Kondensatoranordnung.

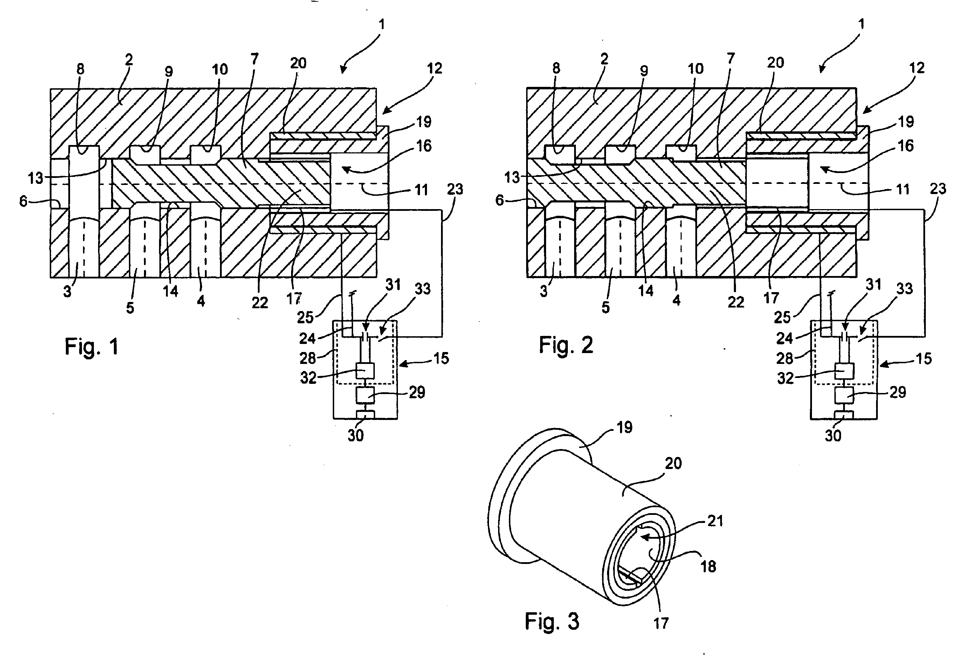

Die schematisch in den Figuren 1 und 2 dargestellte Ventileinrichtung 1 umfasst ein Ventilgehäuse 2, an dem ein Eingangsanschluss 3, ein Ausgangsanschluss 4 sowie ein Arbeitsanschluss 5 ausgebildet sind. Exemplarisch ist die Ventileinrichtung 1 als 3/2-Wegeventil ausgebildet, das eine Beeinflussung eines Fluidstroms in einer nicht dargestellten, am Arbeitsanschluss 5 anschließbaren Fluidleitung ermöglicht. Exemplarisch dient der Eingangsanschluss 3 zur Zufuhr eines druckbeaufschlagten Fluids an den Arbeitsanschluss 5, während der Ausgangsanschluss 4 zur Abfuhr eines druckbeaufschlagten Fluids vom Arbeitsanschluss 5 dienen kann. Je nach Druckbeaufschlagung einer am Arbeitsanschluss 5 angeschlossenen, nicht dargestellten fluidischen Komponente wirkt der Arbeitsanschluss 5 als Eingangsanschluss für den Zustrom von Fluid in die Ventileinrichtung 1 oder als Ausgangsanschluss für den Abstrom aus der Fluideinrichtung 1. Hierzu kann ein in einem Steuerkanal 6 im Ventilgehäuse 2 linear beweglich aufgenommenes Ventilglied 7 zwischen zwei in den Figuren 1 und 2 dargestellten Schaltstellungen verschoben werden. Jedem der Anschlüsse 3, 4, 5 ist ein Ringraum 8, 9, 10 zugeordnet, der für vorteilhafte Fluidströme zwischen benachbarten Anschlüssen 3, 4, 5 ausgebildet ist. Die Engstellen 13 und 14 zwischen den Ringräumen 8, 9 und 10 sind jeweils auf den größten Außendurchmesser des Ventilglieds 7 angepasst und dienen als Ventilsitz. Das Ventilglied 7 ist längs einer Bewegungsachse 11 linear verschiebbar, die exemplarisch auch als Mittelachse für die Ringräume 8, 9, 10 dient und die exemplarisch quer zu Mittelachsen der Anschlüsse 3, 4, 5 angeordnet ist. Ein zur Bewegung des Ventilglieds 7 vorgesehenes Stellmittel ist nicht dargestellt, hierbei kann es sich beispielsweise um eine magnetische Tauchspule oder um einen fluidischen Arbeitszylinder handeln, der dem Ventilglied 7 zugeordnet ist.

Das Ventilglied 7 kann in Abhängigkeit von seiner Schaltstellung im Ventilgehäuse 2 die kommunizierende Verbindung zwischen dem Eingangsanschluss 3 und dem Arbeitsanschluss 5 sowie zwischen dem Arbeitsanschluss 5 und dem Ausgangsanschluss 4 beeinflussen. In der ersten Schaltstellung des Ventilglieds 7 gemäß der Figur 1 ist die kommunizierende Verbindung zwischen Eingangsanschluss 3 und Arbeitsanschluss 5 blockiert, während die kommunizierende Verbindung zwischen Arbeitsanschluss 5 und Ausgangsanschluss 4 freigegeben ist. In der zweiten Schaltstellung gemäß Figur 2 kann hingegen Fluid vom Eingangsanschluss 3 zum Arbeitsanschluss 5 strömen, während ein Fluidstrom zum Ausgangsanschluss 4 blockiert ist.

Zur Ermittlung der Schaltstellung des Ventilglieds 7 ist eine Sensoreinrichtung 12 vorgesehen, die eine Auswerteeinrichtung 15 und eine Kondensatoranordnung 16 umfasst. Die Kondensatoranordnung 16 ist in der Schnittdarstellung der Figuren 1 und 2 konkret dargestellt, die Auswerteeinrichtung 15 ist lediglich schematisch dargestellt.

Die Kondensatoranordnung 16 umfasst eine exemplarisch hülsenabschnittsförmig ausgebildete erste Kondensatorelektrode 17 sowie eine spiegelsymmetrisch zur Schnitt- und Darstellungsebene der Figuren 1 und 2 angeordnete, in den Figuren 1 und 2 aufgrund der Schnittdarstellung nicht sichtbare zweite Kondensatorelektrode 18, die in der Figur 3 dargestellt ist. Die beiden jeweils hülsenabschnittsförmig ausgebildeten Kondensatorelektroden 17, 18 begrenzen einen im Wesentlichen zylindrischen Kondensatorraum 21, in den ein als Sensorabschnitt 22 ausgebildeter, beispielsweise zylindrisch ausgeführter, Abschnitt des Ventilglieds 7 ein- und aus gefahren werden kann. Hierdurch wird die Kapazität des durch die beiden Kondensatorelektroden 17 und 18 gebildeten Kondensators in Abhängigkeit von der Schaltstellung des Ventilglieds 7 beeinflusst.

Vorliegend sind die Kondensatorelektroden 17, 18 an einer zylindrisch ausgebildeten Isolatorhülse 19, die beispielsweise aus Kunststoff hergestellt ist, angebracht, vorzugsweise stoffschlüssig mit dieser verbunden. An einem Außenumfang der Isolatorhülse 19 ist eine Abschirmhülse 20 aus einem elektrisch leitenden Material angebracht, die die beiden Kondensatorelektroden 17, 18 zirkular umschließt und somit eine vorteilhafte Abschirmung der Kondensatorelektroden 17, 18 gewährleisten kann.

Die Auswerteeinrichtung 15 ist über schematisch dargestellte Anschlussleitungen 23, 24 elektrisch mit den Kondensatorelektroden 17 bzw. 18 verbunden. Die Anschlussleitung 24 ist abgeschnitten dargestellt, da sie zu der in den Figuren 1 und 2 nicht dargestellten Kondensatorelektrode 18 führt. Die Abschirmhülse 20 ist mittels einer die Anschlussleitungen 23 und 24 umgebenden Abschirmleitung 25 mit der Auswerteeinrichtung 15 verbunden. Die Abschirmleitung 25 kann beispielsweise ein Drahtgeflechtschlauch aus elektrisch leitendem Draht sein.

Die Auswerteeinrichtung 15 umfasst einen schematisch dargestellten Analog-Digitalwandler 28 und einen ebenfalls schematisch dargestellten Mikrocontroller 29. Der Analog-Digitalwandler 28 dient dazu, die Kapazität der durch die Kondensatorelektroden 17 und 18 sowie gegebenenfalls den Sensorabschnitt 22 gebildeten Kondensatoranordnung 16 zu bestimmen und den ermittelten Kapazitätsbetrag zu digitalisieren und an den Mikrocontroller 29 weiterzuleiten, der diesen verarbeitet und über eine schematisch dargestellte Datenschnittstelle 30 an eine nicht dargestellte Steuer- oder Regeleinrichtung bereitstellen kann. Der Analog-Digitalwandler 28 umfasst unter anderem einen internen Wandlerkondensator 31, der von eine nicht näher dargestellten Spannungsquelle mit elektrischer Ladung beaufschlagt werden kann. Der Betrag der am Wandlerkondensator 31 vorliegenden elektrischen Ladung kann über eine Abtasteinrichtung 32 ermittelt werden, die hieraus im Zuge der Analog-Digitalwandlung eine dem Ladungsbetrag entsprechende Binärsignalkette erzeugt.

In einem ersten Verfahrensschritt zur Ermittlung der Schaltstellung des Ventilglieds 7 wird zunächst der Wandlerkondensator 31 über die nicht dargestellte Spannungsquelle aufgeladen, bis er eine feste, von der bereitgestellten elektrischen Spannung abhängige elektrische Ladungsmenge aufgenommen hat. Zu diesem Zeitpunkt findet eine Bestimmung der am Wandlerkondensator 31 anliegenden elektrischen Spannung über die Abtasteinrichtung 32 statt, daraus kann mit Hilfe des Mikrocontrollers 29 die Ausgangsladungsmenge im Wandlerkondensator 31 vor Durchführung des Messvorgangs bestimmt werden. In einem nachfolgenden Schritt wird die im Wandlerkondensator 31 gespeicherte elektrische Ladung durch Schließen eines schematisch dargestellten Schalters 33, bei dem es sich insbesondere um einen in den Analog-Digitalwandler 28 integrierten elektronischen Schalter handeln kann, über die Anschlussleitung 23 an die Kondensatorelektrode 17 bereitgestellt. Die Kondensatorelektrode 18 liegt über die Anschlussleitung 24 beispielsweise auf Massepotential.

Sofern sich, wie dies in Figur 1 dargestellt ist, der Sensorabschnitt 22 zumindest bereichsweise in dem durch die Kondensatorelektroden 17 und 18 bestimmten Kondensatorraum 21 befindet, steigert dies die Kapazität der auch als Messkondensator bezeichneten Kondensatoranordnung 16. Diese Kapazitätssteigerung ist darauf zurückzuführen, dass der elektrisch leitend ausgebildete Sensorabschnitt 22 den elektrisch wirksamen Abstand zwischen den beiden Kondensatorelektroden 17, 18 verringert und hierdurch zur Kapazitätssteigerung führt. In diesem Fall ist die Kondensatoranordnung 16 in der Lage, eine erste Ladungsmenge zu speichern, die sich von einer Ladungsmenge unterscheidet, die die Kondensatoranordnung 16 in dem Fall aufnehmen kann, dass der Sensorabschnitt 22 nicht im Kondensatorraum 21 angeordnet ist, wie dies in der Figur 2 dargestellt ist. Die geringere Kapazität der Kondensatoranordnung 16 bei Abwesenheit des Sensorabschnitts 22 im Kondensatorraum 21 ist darauf zurückzuführen, dass in diesem Fall der Abstand zwischen den beiden Kondensatorelektroden 17 und 18 groß ist.

Nach erfolgtem Ladungsaustausch zwischen dem Messkondensator 16 und dem Wandlerkondensator 31 kann der Schalter 33 wieder geöffnet werden und anschließend mit Hilfe der Abtasteinrichtung 32 die am Wandlerkondensator 31 vorliegende Ladungsmenge bestimmt werden. Der Betrag der Ladung wird von der Abtasteinrichtung 32 in eine Binärsignalkette umgesetzt, die dem Mikrocontroller 29 bereitgestellt wird. Der Mikrocontroller 29 kann nunmehr durch Vergleich der unterschiedlichen Beträge der elektrischen Ladung am Wandlerkondensator 31 vor und nach Ladungsausgleich mit dem Messkondensator 16 in Kenntnis der Kapazität des Wandlerkondensators 31 und der Ladespannung die Kapazität des Messkondensators 16 ermitteln und darauf auf die Stellung des Ventilglieds 7 zurückschließen.

Bei einer Weiterbildung des vorstehend ausgeführten Verfahrens ist vorgesehen, dass für den Zeitpunkt des Ladungsausgleichs zwischen dem Wandlerkondensator 31 und dem Messkondensator 16 die Abschirmleitung 25 und somit auch die Abschirmhülse 20 mit dem gleichen elektrischen Potential beaufschlagt wird, wie dies vor Durchführung der Messung an den Wandlerkondensator 31 angelegt wird. Hierdurch werden parasitäre Streukapazitäten vermindert und somit das Messergebnis verbessert. Dieses Verfahren wird auch als "Active Guarding" bezeichnet.

Bei einer weiteren vorteilhaften Weiterbildung der Erfindung ist vorgesehen, dass eine Kapazitätsdifferenz zwischen dem Wandlerkondensator 31 und dem Messkondensator 16 ermittelt wird. Hierzu wird in einem ersten Schritt ein erster der beiden Kondensatoren 16, 31 mit einer ersten Ladespannung aufgeladen, der zweite der Kondensatoren 16, 31 wird entladen, anschließend findet der Ladungsaustausch zwischen den beiden Kondensatoren 16, 31 statt und die im Wandlerkondensator 31 anliegende Ladungsmenge wird ermittelt. In einem zweiten Schritt wird ein zweiter der beiden Kondensatoren 16, 31 mit einer zweiten Ladespannung aufgeladen, der erste der Kondensatoren 16, 31 wird entladen, anschließend findet der Ladungsaustausch zwischen den beiden Kondensatoren 16, 31 statt und die im Wandlerkondensator 31 anliegende Ladungsmenge wird ermittelt. Nach Durchführung der beiden Ladungsaustauschvorgänge wird im Analog-Digitalwandler 28 die Ladungsdifferenz zwischen der beim ersten und der bei zweiten Messvorgang am Wandlerkondensator 31 anliegenden elektrischen Ladung ermittelt und damit die Kapazität des Messkondensators 16 bestimmt. Durch dieses Verfahren können verschiedene Fehlerquellen für Messfehler ausgeschaltet werden und somit das Messergebnis verbessert werden.

Als besonders vorteilhaft hat es sich herausgestellt, die Ermittlung des am Wandlerkondensator 31 vorliegenden elektrischen Ladungsbetrags im Oversampling Verfahren durchzuführen, wodurch eine zusätzliche Steigerung der Genauigkeit des Messergebnisses erzielt werden kann. Die vorstehend genannten Verfahrensschritte können vorteilhaft miteinander kombiniert werden.

Mit Hilfe des vorstehend geschilderten Verfahrens ist eine Ermittlung der Schaltstellung des Ventilglieds 7 mit geringen Kosten möglich. Je nach Auflösung des Analog-Digitalwandlers 28 und in Abhängigkeit von der Gestaltung des Wandlerkondensators 31 und des Messkondensators 16 sowie des Sensorabschnitts 22 kann auch eine Ermittlung von Zwischenstellungen des Ventilglieds 7 zwischen der in der Figur 1 dargestellten ersten Schaltstellung und der in Figur 2 dargestellten zweiten Schaltstellung vorgesehen sein. Dies ist beispielsweise bei Ventileinrichtungen von Vorteil, die über mehrere Schaltstellungen verfügen oder die als Proportionalventile mit einer Vielzahl von Zwischenstellungen anzusteuern sind.

## Patentansprüche

1. Ventileinrichtung zum Steuern eines Fluidstroms, mit einem Ventilgehäuse (2), an dem ein Eingangsanschluss (3) für einen Fluidzustrom und ein Ausgangsanschluss (4) für einen Fluidabstrom ausgebildet sind und mit einem linear beweglichen Ventilglied (7), das im Ventilgehäuse zwischen einer ersten Schaltstellung und einer zweiten Schaltstellung verschiebbar gelagert ist, um eine Beeinflussung einer kommunizierenden Verbindung zwischen dem Eingangsanschluss (3) und dem Ausgangsanschluss (4) zu bewirken, sowie mit einer Sensoreinrichtung (12) zur Ermittlung einer Schaltstellung des Ventilglieds (7), die einen Messkondensator (16) mit einer von der Schaltstellung des Ventilglieds (7) abhängigen Kondensatorkapazität sowie eine Auswerteeinrichtung (15) zur Ermittlung der Kondensatorkapazität und zur Ausgabe eines kapazitätsabhängigen Messsignals umfasst, wobei der Messkondensator (16) eine erste und eine zweite Kondensatorelektrode (17, 18) aufweist, die jeweils ortsfest in dem Ventilgehäuse (2) angeordnet sind, **dadurch gekennzeichnet, dass** das Ventilglied (7) einen elektrisch leitenden Sensorabschnitt (22) aufweist, der für eine von der Schaltstellung des Ventilglieds (7) abhängige Positionierung zwischen den beiden Kondensatorelektroden (17, 18) ausgebildet ist, um eine Kapazität des durch die Kondensatorelektroden (17, 18) gebildeten Messkondensator (16) zu beeinflussen und dass die Kondensatorelektroden (17, 18) als zylinderhülsenabschnittsförmige, spiegelsymmetrisch zueinander ausgerichtete Leitelemente ausgebildet sind.

2. Ventileinrichtung nach Anspruch 1, **dadurch gekennzeichnet, dass** die Kondensatorelektroden (17, 18) und/oder mit einer Kondensatorelektrode (17, 18) verbundende Messleitung (23, 24) von einem, insbesondere zylinderhülsenförmig ausgebildeten, elektrisch leitenden Abschirmmittel (20, 25) umgeben sind.

3. Ventileinrichtung nach Anspruch 2, **dadurch gekennzeichnet, dass** die Auswerteeinrichtung (15) derart ausgebildet ist, dass während eines Messvorgangs die Abschirmmittel (20, 25) und die Messleitung (23, 24), die mit einer der Kondensatorelektroden (17, 18) verbunden ist, auf das gleiche elektrische Potential geschaltet werden.

4. Ventileinrichtung nach einem der vorhergehenden Ansprüche, **dadurch gekennzeichnet, dass** die Auswerteeinrichtung (15) einen zur Auswertung der Kondensatorkapazität ausgebildeten Analog-Digitalwandler (28) umfasst, der zur Bereitstellung einer zur Ermittlung der Schaltstellung des Ventilglieds (7) notwendigen elektrischen Ladungsmenge an den Messkondensator (16) ausgebildet ist.

5. Ventileinrichtung nach einem der Ansprüche 2 bis 4, **dadurch gekennzeichnet, dass** zwischen den Abschirmmitteln (20, 25) und den beiden Kondensatorelektroden (17, 18) ein hülsenförmig ausgebildeter Isolator (19) angeordnet ist.

6. Ventileinrichtung nach einem der vorhergehenden Ansprüche, **dadurch gekennzeichnet, dass** das ventilgehäuse (2) eine Ausnehmung (6) zur Aufnahme einer aus Kondensatorelektroden (17, 18), Abschirmmittel (20) und Isolator (19) ausgebildeten Kondensatoranordnung (16) aufweist und/oder aus einem elektrisch isolierendem Material, insbesondere aus Kunststoff hergestellt ist.

7. Verfahren zur Ermittlung einer Schaltstellung eines Ventilglieds (7) in einer Ventileinrichtung (1) nach einem der vorhergehenden Ansprüche, mit den Schritten: Aufladen eines Wandlerkondensators (31), der einem Analog-Digitalwandler (28) zugehörig ist, auf einem vorgegebenen Spannungswert; Bereitstellung der elektrischen Kondensatorladung des Wandlerkondensators (31) an einen Messkondensator (16), dessen Kapazität von einer Stellung des Ventilglieds (7) abhängig ist, Ermitteln des Betrags der im Wandlerkondensator (31) verbliebenen elektrischen Ladung sowie Umwandeln des ermittelten Betrags der verbliebenen Ladung in ein Digitalsignal zur weiteren Verarbeitung und Auswertung durch einen Mikrocontroller (29), Ausgabe eines Positionssignals durch den Mikrocontroller (29), **dadurch gekennzeichnet, dass** der Messkondensator (16) vor oder nach der Bereitstellung der Ladung durch den Wandlerkondensator (31) mit einer vorgebbaren Ladespannung, insbesondere mit der gleichen Ladespannung wie der Wandlerkondensator (31), geladen wird, um nach Durchführung eines Ladungsaustauschs mit dem Wandlerkondensator (31) im Analog-Digitalwandler (28) eine Differenzermittlung der zwischen den beiden Kondensatoren (16, 31) ausgetauschten Ladungen vorzunehmen.

8. Verfahren nach dem Oberbegriff des Anspruchs 7 oder nach Anspruch 7, **dadurch gekennzeichnet, dass** eine Abtastung der Ladungsdifferenz im Oversampling Verfahren vorgenommen wird und/oder vor der Verarbeitung der Ladungsdifferenz im Mikrocontroller (29) eine Mittelwertbildung für die ermittelten Abtastwerte erfolgt.

## Claims

1. Valve device for controlling a fluid stream, comprising a valve housing (2) on which are formed an inlet port (3) for a fluid inlet flow and an outlet port (4) for a fluid outlet flow, and further comprising a valve member (7) capable of linear movement, which is mounted in the valve housing for movement between a first switching position and a second switching position to influence a communicating connection between the inlet port (3) and the outlet port (4), and further comprising a sensor device (12) for detecting a switching position of the valve member (7), which sensor device (12) comprises a measuring capacitor (16) having a capacitor capacity depending on the switching position of the valve member (7) and an evaluation device (15) for detecting the capacitor capacity and for outputting a capacity-dependent measurement signal, the measuring capacitor (16) having a first and a second capacitor electrode (17, 18) located in the valve housing (2) in a fixed position, **characterised in that** the valve member (7) comprises an electrically conductive sensor section (22) which is designed for a positioning between the two capacitor electrodes (17, 18) as a function of the switching position of the valve member (7), in order to influence a capacity of the measuring capacitor (16) represented by the capacitor electrodes (17, 18), and **in that** the capacitor electrodes (17, 18) are designed as conducting elements which have the shape of a cylindrical sleeve section and are oriented in a mirrorsymmetric arrangement relative to one another.

2. Valve device according to claim 1, **characterised in that** the capacitor electrodes (17, 18) and/or a measuring line (23, 24) connected to one of the capacitor electrodes (17, 18) is/are surrounded by an electrically conducting screening means (20, 25) which has the shape of a cylindrical sleeve in particular.

3. Valve device according to claim 2, **characterised in that** the evaluation device (15) is designed such that the screening means (20, 25) and the measuring line (23, 24) connected to one of the capacitor electrodes (17, 18) are switched to the same electric potential in a measuring process.

4. Valve device according to any of the preceding claims, **characterised in that** the evaluation device (15) comprises an analogue-to-digital converter (28) which is designed for the evaluation of the capacitor capacity and for the provision of an electric charge quantity to the measuring capacitor (16) which is required for the determination of the switching position of the valve member (7).

5. Valve device according to any of claims 2 to 4, **characterised in that** a sleeve-shaped insulator (19) is provided between the screening means (20, 25) and the two capacitor electrodes (17, 18).

6. Valve device according to any of the preceding claims, **characterised in that** the valve housing (2) has a recess (6) for the accommodation of a capacitor assembly (16) comprising the capacitor electrodes (17, 18), the screening means (20) and the insulator (19), and/or **in that** it is made of an electrically insulating material, in particular plastic.

7. Method for determining the switching position of a valve member (7) in a valve device (1) according to any of the preceding claims, comprising the steps of: charging a converter capacitor (31) belonging to an analogue-to-digital converter (28) to a preset voltage value; making available the electric capacitor charge of the converter capacitor (31) to a measuring capacitor (16) the capacity of which depends on a position of the valve member (7); determining the value of the electric charge remaining in the converter capacitor (31) and converting the determined value of the remaining electric charge into a digital signal for further processing and evaluation by a microcontroller (29); output of a position signal by the microcontroller (29), **characterised in that** the measuring capacitor (16) is, before or after the provision of the charge by the converter capacitor (31), charged with a presettable charging voltage, in particular with the same charging voltage as the converter capacitor (31), in order to determine in the analogue-to-digital converter (31) a differential of the charges exchanged between the two capacitors (16, 31) following the completion of a charge exchange with the converter capacitor (31).

8. Method according to the preamble of claim 7 or according to claim 7, **characterised in that** the charge differential is scanned using the oversampling method, and/or **in that** the determined scanning values are averaged before the charge differential is processed in the microcontroller (29).

## Revendications

1. Dispositif de soupape servant à commander un courant de fluide, comprenant un boîtier de soupape (2), au niveau duquel sont réalisés un raccordement d'entrée (3) pour un fluide entrant et un raccordement de sortie (4) pour un fluide sortant, ainsi qu'un organe de soupape (7) mobile linéairement, lequel est logé dans le boîtier de soupape de manière à pourvoir être déplacé par coulissement entre une première position de commutation et une deuxième position de commutation afin d'influer sur une liaison communicante entre le raccordement d'entrée (3) et le raccordement de sortie (4), et comprenant un dispositif de détection (12) servant à déterminer une position de commutation de l'organe de soupape (7), lequel comprend un condensateur de mesure (16) présentant une capacité de condensateur dépendant de la position de commutation de l'organe de soupape (7) ainsi qu'un dispositif d'analyse (15) servant à déterminer la capacité de condensateur et servant à délivrer un signal de mesure dépendant de la capacité, sachant que le condensateur de mesure (16) présente une première électrode de condensateur et une deuxième électrode de condensateur (17, 18), lesquelles sont disposées respectivement de manière stationnaire dans le boîtier de carter (2), **caractérisé en ce que** l'organe de soupape (7) présente une section de détection (22) électroconductrice, laquelle est réalisée pour un positionnement entre les deux électrodes de condensateur (17, 18) dépendant de la position de commutation de l'organe de soupape (7) afin d'influer sur une capacité du condensateur de mesure (16) formé par les électrodes de condensateur (17, 18), et **en ce que** les électrodes de condensateur (17, 18) sont réalisées sous la forme d'éléments conducteurs présentant une forme de section de douille cylindrique, orientés les uns par rapport aux autres de manière symétrique en miroir.

2. Dispositif de soupape selon la revendication 1, **caractérisé en ce que** les électrodes de condensateur (17, 18) et/ou une ligne de mesure (23, 24) reliée à une électrode de condensateur (17, 18) sont entourées d'un moyen de blindage (20, 25) électroconducteur, réalisé en particulier de manière à présenter une forme de douille cylindrique.

3. Dispositif de soupape selon la revendication 2, **caractérisé en ce que** le dispositif d'analyse (15) est réalisé de telle manière que lors de l'opération de mesure, les moyens de blindage (20, 25) et la ligne de mesure (23, 24), qui est reliée à l'une des électrodes de condensateur (17, 18), sont commutés sur le même potentiel électrique.

4. Dispositif de soupape selon l'une quelconque des revendications précédentes, **caractérisé en ce que** le dispositif d'analyse (15) comprend un convertisseur analogique-numérique (28) réalisé aux fins de l'analyse de la capacité de condensateur, lequel convertisseur analogique-numérique est réalisé au niveau du condensateur de mesure (16) pour fournir une puissance électrique nécessaire à la détermination de la position de commutation de l'organe de soupape (7).

5. Dispositif de soupape selon l'une quelconque des revendications 2 à 4, **caractérisé en ce qu'**un isolateur (19) réalisé de manière à présenter une forme de douille est disposé entre les moyens de blindage (20, 25) et les deux électrodes de condensateur (17, 18).

6. Dispositif de soupape selon l'une quelconque des revendications précédentes, **caractérisé en ce que** le boîtier de soupape (2) présente un évidement (6) servant à loger un ensemble de condensateurs (16) réalisé à partir d'électrodes de condensateur (17, 18), de moyens de blindage (20) et d'un isolateur (19) et/ou est fabriqué à partir d'un matériau isolant électriquement, en particulier à partir d'une matière plastique.

7. Procédé servant à déterminer une position de commutation d'un organe de soupape (7) dans un dispositif de soupape (1) selon l'une quelconque des revendications précédentes, comprenant les étapes suivantes consistant à : charger un condensateur de conversion (31), qui est associé à un convertisseur analogique-numérique (28), à une valeur de tension prédéfinie ; fournir la charge de condensateur électrique du condensateur de conversion (31) à un condensateur de mesure (16), dont la capacité dépend d'une position de l'organe de soupape (7) ; déterminer la valeur de la charge électrique restée dans le condensateur de conversion (31) ; transformer la valeur déterminée de la charge restée dans le condensateur de conversion en un signal numérique aux fins du traitement ultérieur et de l'analyse par un microcontrôleur (29) ; délivrer un signal de position par le microcontrôleur (29), **caractérisé en ce que** le condensateur de mesure (16) est chargé avant ou après la mise à disposition de la charge par le condensateur de conversion (31) à l'aide d'une tension de charge pouvant être prédéfinie, en particulier à l'aide de la même tension de charge que le condensateur de conversion (31), afin de réaliser après la mise en oeuvre d'un échange de charge avec le condensateur de conversion (31), dans le convertisseur analogique-numérique (28), une détermination de différence entre les charges échangées entre les deux condensateurs (16, 31).

8. Procédé selon le préambule de la revendication 7 ou selon la revendication 7, **caractérisé en ce qu'**est réalisé un balayage de la différence de charge lors du procédé de suréchantillonnage, et/ou **en ce qu'**est effectué, avant le traitement de la différence de charge dans le microcontrôleur (29), un calcul de la valeur moyenne des valeurs de balayage déterminées.
